# EUROPEAN PATENT SPECIFICATION

(11) **EP 2 255 216 B1**
(45) Date of publication and mention of the grant of the patent: **24.09.2014**
(21) Application number: 09714664.1
(22) Date of filing: 27.02.2009
(51) Int. Cl.: G01S 5/14

(54) **SYSTEM FOR TRACKING AN ASSET**
SYSTEM ZUM VERFOLGEN EINES WERTGEGENSTANDS
SYSTÈME DE SUIVI D'UN ACTIF

(30) Priority: 28.02.2008 GB 0803657; 02.12.2008 GB 0821972
(43) Date of publication of application: 01.12.2010
(73) Proprietor: Retrieva Ltd, Berkhamsted, Hertfordshire HP4 2DG (GB)
(72) Inventor: BRYAN, Jon, Amersham Buckinghamshire HP7 9BL (GB)
(74) Representative: Smee, Anthony James Michael
(86) International application number: PCT/GB2009/050201
(87) International publication number: WO 2009/106896

(56) References cited:
- WO-A-2008/104810
- US-A- 5 461 365
- US-A- 5 742 233
- US-A1- 2004 239 508
- US-A1- 2005 017 901
- US-A1- 2005 068 169
- US-A1- 2006 202 818

## Description

The invention relates to a system for tracking an asset, such as a pet, a bicycle, a caravan, artwork or other, valuable, but movable, item. In particular, the invention is concerned with a tracking system which can provide location specific information in the event that the asset is moved from a predetermined area or if the tracking device connected to the asset is tampered with in any way.

The ability to ensure that an asset is secure is typically managed through lockable security devices and alarm systems. For example, a house may have window and door locks. Shops and other businesses, private garages and out buildings typically have external and internal door locks, as well as alarm systems, and most of the time this provides not only security to the building and assets retained within that building, but also it acts as a deterrent to people who may consider an unauthorised entry.

There are, however, occasions when items of value currently stored within a locked interior, or where items of greater value require additional security within a building, such as sculptures or works of art.

In these situations, and in order to achieve the necessary piece of mind, the owner of this asset typically wants certain knowledge relating to the asset. Firstly, they need to know that the asset is safe in a particular location and cannot be moved from that location. Secondly, the owner would like to know if the asset has been moved or is being tampered with. Thirdly, the owner would like to be notified if the asset is being moved or is being tampered with. Finally, it is advantageous to have the ability to track or locate the asset if it has been stolen.

As an example, a high value road racing bike is typically lightweight and easily portable and, as such, is relatively easily stolen. In order to secure the bike, the owner is likely to keep it locked in a garage or in his home and it may also have a bike chain lock attached to it for added protection. Whilst these measures can provide security in its "home" location, it would still be possible for someone to make an unauthorised entry into the property, remove the lock and steal the bicycle. There are also many times when the bicycle will not be at home.

In an earlier British patent application (GB0773907.6), the present applicant has described a tracking device comprising a main body, means for attaching the main body to an article to be tracked, a tracking system on or within the main body, the tracking system having at least a GPS receiver and a GSM module, one or more security devices within the main body and/or the attaching means for hindering removal of the tracking device from the article to be tracked and a means for alerting the owner of the device about any unauthorised removal of the device or interference with the electronics, that attaching means or other elements of the device.

Such a tracking device typically functions as a stand alone product and, in the event of an alert being generated, the alert is transmitted to the owner of the device being tracked, typically by way of a cell phone message or the like. In addition, due to the provision of a GPS or GSM module the device can be actively tracked, assuming that these devices are active.

US20060202818 discloses a tracking system which obtains a location of a tracked device when it is outside of the range of an RF signal emitted by a base station.

US20040239508 discloses a tracking device which communicates with a manager or parent to transmit an alarm signal when the device moves a set distance from a pre-set GPS reference position.

According to the present invention, there is provided a system for tracking an asset, the system comprising:
a base station;
one or more tracking device(s) for connection to the asset, the tracking device containing a GPS module, a GSM module and an RF module;
each of the base station and the tracking device comprising means for establishing a paired RF communications link with one another to set a geofenced area for the tracking device, the tracking device having means for communicating with the base station in the event that one or more of a set of predetermined conditions are achieved, and further including means for setting different modes of the system; characterised in that:
   the tracking device is arranged to automatically operate in a first mode in the case that the tracking device is within a first geofenced area, defined as being within RF communication range of a base station, the first mode being a home mode, which causes the GPS and GSM modules to operate in a reduced power consumption mode;
   the tracking device is further arranged to be preset with a reference set of GPS coordinates and is arranged to operate in a second mode when within a second geofenced area, defined as being within a preset radius of the location defined by the reference set of GPS coordinates, the second mode being a mode which causes the RF and GSM modules to operate in a reduced power consumption mode;
   the tracking device is further arranged to, in the case that the tracking device detects that it is no longer in either of the geofenced areas:
      operate in a third, roaming, mode, in which the GPS receiver is active, the GSM module is active to receive commands and the device is monitoring for a paired RF transceiver of a base station, via the RF module;
      send an alert to a user indicating that the device has left the first or second geofenced area; and
      monitor for a command, sent from the user to the tracking device via the GSM module, instructing the device to switch to a fourth, tracking, mode, in which:
         the GSM module is active and transmitting status data at intervals and monitoring for further user commands;
         the RF transceiver is active to act as a homing beacon and to transmit identification, location and status of the tracking device; and
         the tracking device will switch off its tracking mode in response to either a command received from a user or by detection of its position returning within either of the geofenced areas.

Thus, the present invention provides a system enabling communication between the base station and the tracking device such that, in the event that any specified condition is met, i.e., tampering with the tracking device, removal of the device from the asset to be tracked, movement of the tracking device outside a predetermined location or area, triggers communication with the base station or, in the alternative, with an outside third party, in order to raise an alert. In addition, the base station with the two way communication permits greater control of the tracking device and its components, leading to optimisation of the power requirements of each component and, as a result, a longer period of use of the device before the power is exhausted.

The tracking device comprises each of a GPS module, a GSM module and an RF module.

The system comprises means for generating an alert when one of the predetermined conditions are met and the alert may be sent to the base station from the tracking device or may be sent to a third party from either the base station or the tracking device or may be sent from the base station to the tracking device.

The alert is preferably one of an audible alert, a visual alert or a power on or off command. The alert may preferably include location information relating to the position of the tracking device.

The conditions which trigger an alert to be generated may include one or more of the following:
the tracking device is beyond a predetermined distance from the base station;
the tracking device is outside of a predetermined area;
the tracking device has been tampered with;
the tracking device has been removed from the asset; and
the tracking device has been removed from a predetermined position or area.

The base station and the tracking device may include means for setting different modes of operation of the system. The different modes cause one or more of the GPS module, the GSM module or the RF module to be inactivated.

An alarm device may be located on either the tracking device or the base station or both and which, upon activation, initiates an alert.

The tracking device may be provided with a base plate which, in use, can be attached to the asset, with the tracking device being connected, in use, to the base plate. An alert may be generated if the tracking device is removed from the base plate.

The system preferably also comprises means for enabling a user to manually override the system, such that communication from the tracking device can be initiated at any particular time, thereby enabling the owner of the asset to verify its location.

The base station preferably includes charging means for supplying power to the tracking device when the tracking device is connected to the base station.

Self diagnostic buttons may be provided on the tracking device and/or the base station, so that the user is able to determine the status of various conditions of the tracking device or base station without detailed examination of each device. The tracking device is preferably provided with means for receiving and/or processing information sent from a mobile telephone.

The tracking device and/or the base station may be provided with a microphone to enable a user to provide an audible signal for transmission to the base station or a third party or from the base station back to the tracking device.

The tracking device may be provided with a light sensor and/or a movement sensor, the movement sensor being either a two directional or three directional sensor.

The tracking device may be provided with a security strap such that it can be connected to an asset, the security strap preferably containing anti-cut material to prevent the tracking device from being removed from the asset. The tracking device may be integrated into a collar with a releasable buckle that can, preferably, be locked.

The system may comprise a plurality of base stations which may be placed, in use, at a distance from one another such that the area over which a tracking device may move whilst remaining within RF communication range of any one of the base stations is larger than the area over which it may move whilst remaining within RF communication range of a single stationary base station.

The tracking device is arranged to operate in a first mode in the case that the tracking device is within RF communication range of a base station, and in a second mode in the case that the tracking device is not within RF communication range of a base station. The first mode is the tracking device's "Home mode" and the second mode may be either its "Roaming Mode" or its "Track Mode", depending upon the criteria defined above.

The mode selected when the tracking device is within the preset radius of the location defined by the reference set of GPS coordinates causes the RF and

GSM modules to operate in a reduced power consumption mode, or further in a zero power consumption mode.

The system may further comprise a monitoring device, the monitoring device having:
means for tracking its own GPS location;
means for receiving data describing the position of the tracking device;
means for displaying its own location and the location of the tracking device simultaneously on a graphical representation of the surrounding area.

The monitoring device may receive the location data from the tracking device directly via an RF link or over the GSM network.

The monitoring device may be arranged to receive data from a plurality of tracking devices and to allow the user to select for which of the plurality of tracking devices relevant location data is displayed.

The GPS module uses a system of 24 satellites to calculate the position of the tracking device to within a distance of 10 meters or less (under current technology). The antenna works best with a view of the sky and therefore it is preferable that the antenna is positioned within the tracking device such that it is generally directed upwardly in the normal orientation in which the asset is positioned.

In the event that the GPS module cannot function, due to the device being inside a building, in an area of high buildings, underground or under dense foliage, each of which may limit the effect of the GPS, a GSM module can be used to establish a location for the device. This uses triangulation to calculate where the phone signal from the GSM module originates and, as this does not require a view of the sky, can be used if the GPS system is inhibited. However, the GSM module is less accurate than GPS.

An RF module can be utilised in situations in which neither GPS or GSM coverage is available and operates over a shorter range, typically from 100 meters to 1500 meters. The RF module can work inside buildings and underground and therefore can be used in situations in which neither GPS nor GSM is available. Hence it is preferable for all three of the GPS module, a GSM module and an RF module to be included in the tracking device.

The tracking device not only tracks the assets, but also acts as an anti-theft device and a deterrent. It also functions as a personal safety device, as a panic button may be incorporated. When activated, the panic button can transmit an alert to the base station, to a third party or to a list of third parties and may alter the mode in which the tracking device is set.

Examples of modes, in order of least active to most active, which the invention may utilise are as follows:
**Idle Mode** (typically used when the tracking device is inactive)
   - This mode is automatically set when the tracking device is unlatched (undone) or not connected to the asset.
   - The GPS receiver is inactive.
   - The GSM is active only at occasional (settable) intervals to enable updates, changes of mode & general contact with the device.
   - The RF transceiver is inactive.
**Home Mode** (typically used when the tracking device is at home, but some protection is required)
If your tracking device is paired with a base station.
   - The GPS is inactive and the RF link is used to provide geofencing within range of the base station (typically up to 75m radius).
   - The RF transceiver is active and communicating with the base station.
   - The GSM is active only at occasional (settable) intervals to enable updates, changes of mode and general contact with the device.
   - If the device leaves the range of the base station (typically up to 75m radius), the tracking device may automatically change to Roaming Mode.
If your tracking device is **not** paired with a base station.
   - The GPS may be operational to provide GPS-based geofencing (this may be done by sending the unit an SMS (text) command to set a geofence centred around the current location at a radius between 50m and 250m). If the geofence is broken, then the unit may automatically enter Roaming Mode.
   - The GSM is active only at occasional (settable) intervals to enable updates, changes of mode and general contact with the device.
**Roaming Mode** (typically used when the device is out of a safe area (such as home) but not yet in need of being tracked.
   - The GPS receiver is active and tracking to maintain knowledge of current position.
   - The GSM modem is active and can receive commands.
   - The RF transceiver is active and looking for a paired base station. If it moves into range of such a base station for more than 5 minutes it will automatically change to 'Home Mode'.
   - It is not reporting its location, but this information can be requested from the device by SMS (text) instruction, or GPRS (web-based) instruction
**Track Mode** (This mode is used whenever active tracking is required, such as when a dog has run off or an asset has disappeared. It is the highest power-usage mode)
   - The GPS receiver is active and tracking
   - The GSM modem is active and transmitting identification, location and status data via GPRS (to the web-site) at configurable intervals. Commands received by the device via SMS (text) or GPRS (web-panel) will be received and acted upon
   - The RF transceiver is active as a homing-beacon. It transmits its identification, location and status at configurable intervals
   - Track mode can be deactivated by sending a command or automatically by moving within the base RF or GPS-based geofence. The mode will automatically change to 'Home Mode'.

The system can also operate such that a geofence is provided by the system.

A geofence is a virtual boundary that can be used to fence in (or out) the tracking device. When the device leaves this area (or enters it) it can send you a TEXT message warning of this event. This is useful if, for example, a dog has a habit of escaping from the garden, or you are protecting a horse box that should not leave the stables. The system would then give you the opportunity to set the tracking device to TRACK MODE and follow its journey.

It is possible to define the geofence as a set distance from the base station or, alternatively, by accessing an external server, it is possible to define a particular area which should define the boundaries of the desired geofence area. Alternatively, the geofence can be defined at a radial distance from any current position of the tracking device. The tracking device may shut down or set to a low power consumption mode any systems not required when it is within the current geofence. If the geofence is set by GPS coordinates, for example, either or both of the RF and GSM units may be turned off or set to a low power mode. If the geofence is set by an RF link with the base station, either or both of the GPS and GSM modules may be turned off or set to a low power consumption mode.

The tracking device may also send information about its current location to a monitoring device. The monitoring device may be equipped with means of tracking its own location, such as a GPS unit or other location tracking means. The monitoring device may be equipped with a means of displaying its own position, along with the position of any tracking device(s) which are sending their location information to it, on a display such as a screen. A device such as a GPS enabled mobile phone or PDA may be particularly well suited to this task. The monitoring device may be adapted to display the position(s) of any or all of the devices which are sending their location information to it either individually or collectively. Various means may be employed to allow the user to select what information is displayed about each tracking device on the device and which tracking devices' location(s) is/are displayed at any one time. The locations of the tracking devices may be displayed on the device on a graphical representation of the surrounding area such as a map.

The tracking device can be set to inform the user (for example by SMS text message) of certain events. This reporting is not compulsory, but will help the user to react in emergency situations and may help to avoid system failure. It is also possible to tell the unit which Event reports to send to which emergency contact(s), such as a mobile telephone.

### List of Possible EVENTS

- Buckle has been undone and collar is removed (Collar only)
- The collar lock has been forced or broken (Collar only)
- Collar has been locked or unlocked (Collar only)
- Collar is cut or interfered with (Collar only)
- Unit has been removed from its securing plate (Portable unit only)
- DC power is connected or unconnected (i.e. the unit is being charged)
- Low Battery power warning
- Geofence Warning - Unit has left RF or GPS geofence safe area
- Inside Geofence - Unit has returned to RF or GPS geofence safe area
- Change of Mode - Unit has changed modes (see above)
- Panic button pressed - transmits an alert message and current location to a preset list of mobile phone numbers and puts tracking unit in TRACK MODE

There are preferably two buttons on the tracking device.

### YELLOW BUTTON - TEST

The YELLOW button with 'TEST' written on it allows you to assess the operational status of the device. If you press this button the three lights above it will light up. The 'BAT' light will show you how much power is left in the system, the 'GSM' light will show you if you have a mobile (cell) phone signal strong enough to transmit data (e.g. its location), and the 'GPS' light will show you if you have a worthy GPS signal and location fix.

**Status Indicators**

| LED ↓ | Colour → | **RED** | **AMBER** | **GREEN** |
|---|---|---|---|---|
| **BATTERY** | | NO POWER | PARTLY CHARGED (Or Charging) | FULLY CHARGED |
| **GSM** | | NO SIGNAL | POOR SIGNAL | GOOD SIGNAL |
| **GPS** | | NO SIGNAL | POOR SIGNAL | GOOD SIGNAL |

As a general rule, the system will work if the lights are AMBER (but the outcome may be intermittent) or GREEN. If any of the lights are RED you should be aware that the system may fail. It is possible to locate the device if there is no GSM signal, but it will have to be done via the RF transceiver. Likewise, if you have no GPS coverage then this may be resolved by allowing more time for the system to gain a fix (up to 5 minutes), waiting for the device to move to a different area, or using a GSM locate method).

### RED BUTTON - ! (PANIC)

The RED button with '!' on it allows you to put the device into PANIC mode. You should use it if you feel threatened, lost or injured. The device will go into TRACK mode, and send an appropriate SMS TEXT message to the phone numbers on your PHONE LIST.

Whoever receives this message can log on to the web-site and check your location and the status of the device, or contact the device directly via their mobile (cell) phone to check location and status data. A further alert may be generated on the tracking device to show the user that someone has received the generated alert and is responding to it. It is also possible to contact the call centre for assistance.

The tracking device may have two types of charger unit. A standard charger unit can charge both the portable tracking device and a tracking collar (though not at the same time).

The charger unit may provide additional features. These include fixed-point geofencing, battery life enhancement and automatic mode-change facility.

The charger base acts a home-base and links to each charger unit via its on-board RF transceiver. This works over a range of approximately 50m (depending on environmental factors). If the tracking device leaves this area, it can automatically inform you of this event.

Whilst the tracking device is in range of the charger base unit, it may automatically put itself into HOME MODE. This shuts down large parts of the operating system on the understanding that it is close to home and therefore safe. This shut-down process significantly reduces power consumption, and if you are protecting something that spends a significant amount of its time in a safe area (i.e. a dog at home, or a motorbike on your drive) then battery life can be significantly extended.

When the tracking device is in range of the paired charger base, it may automatically put itself into HOME MODE and starts to save battery power. If it leaves range of the charger base it automatically switches to ROAM MODE. This enables the tracker to become quickly aware of its location using its on-board GPS systems, and enhances location time if it is then put into track mode or a location is requested.

As a security measure, the tracking device may be paired with the charger unit so that each part of the system recognises that it belongs to the other.

Each charger base has 4 LED lights on the front, and each LED light (also known as a 'channel') represents one paired tracking unit. This way up to 4 tracking units can be visually paired with each charger base. Of course, a different number of paired devices can be provided and so greater or fewer LEDs may be provided. The relevant LED will light up when the tracker unit is within range. In addition, an unlimited number of trackers can be paired with the charger base and use is system, but in this case the LEDs may not light up and no visual indication will be given. Audible alerts may also be generated on the base station in the response to any of the above mentioned events.

| **Charger LED Indicator** | **Tracker Unit Status** |
|---|---|
| Off | Tracker Unavailable (out of range) |
| Green | Tracker unit within Geofence range |
| Flash Briefly | Tracker pairing has been accepted or removed |
| All 4 indicators flash briefly | Tracker unit is paired and accepted, but not allocated its own LED (already 4 tracker units paired with system |

The base station may be portable such that it may be moved to create a different safe area in a new location. This can allow the tracking device to operate in its 'Home Mode' in the new location away from its normal 'safe area', conserving power and extending battery life. The base station may be powered by mains power, battery power, solar power or other means such that it can be placed in locations where a mains power supply is not available.

The base station may be connected to both fixed line and GSM telecommunications systems such that in the event that one is unavailable, the other may be used to send any alerts to third parties as necessary.

The RF capability of the base station and the tracking device will dictate a limited range over which they are able to remain in RF communication with one another. The loss of the RF communications link with the base station may be used as a condition to indicate that the item, animal or person being tracked has run away, has been stolen or has been subject to any kind of unauthorised removal from the 'safe area'. It may be the case that a single base station does not create a sufficiently large 'safe area' within which the tracking device is in RF communication with a base station. To overcome this, a plurality of base stations may be provided and a condition set for each tracking device such that it remains in "Home Mode" so long as it is in RF communication with any one of the plurality of base stations. The condition may be set to include all of the plurality of base stations provided, or a different sub set of base stations may be set for each different tracking device where there is a plurality of base stations and a plurality of tracking devices.

Alternative means of generating an alert may be used as are described in the following.

The tracking device may be located in the pedal of a bicycle or in a frame which allows the device to be secured directly to the pedal of the bicycle. The frame may be configured to prevent removal of the pedal from the bicycle while the tracking device is secured to the pedal, by blocking access to the fixing bolts of the pedals, for example. The unauthorised removal of the tracking device from the pedal may be used to generate an alert. The movement of the pedal may be used to generate an alert. The motion of the pedal may further be used to generate power for the tracking device to preserve battery life. The tracking device, when used alone or on the pedal of a bicycle, may be arranged to receive other data from a device, such as a heart rate monitor or speedometer, to log data relating to a journey. The data may allow a user to track his or her heart rate and/or speed, or some other monitored parameter, in combination with location data and alternatively with time data.

A safety device having a short range communications link to the tracking device may be provided to a rider or driver of an animal, vehicle or other means of transport. The tracking device may be located on the animal or vehicle such that its location may be tracked at any time. The safety device may be located on the driver or rider such that a link between rider or driver and vehicle or animal is created. In the event that the rider or driver is separated from the vehicle or animal by a sufficient distance, the communications link will be broken. This can generate an alert in order to alert third parties to the event and report the location of the event and the subsequent location of the animal or vehicle. A panic button may be incorporated into the safety device on the rider or driver such that an alert may manually be sent from the tracking device while the communications link is still intact. A time delay may be set in the tracking device such that the alert may be cancelled manually either via the link from the safety device or directly on the tracking device.

The RF or GSM network connectivity in the tracker device may be used to deliver software patches or upgrades directly to the tracking device. Software patches or upgrades may also be delivered via the base station over a direct link when charging or over the RF link, the base station may download these over a fixed line or wireless telecommunications connection prior to upload to the tracker device.

The present invention will now be described with reference to the accompanying drawings, in which:
Figures 1a to c illustrate one example of a tracking device with base plate;
Figure 1d illustrates a buckle for use with the device of Figures 5a to c;
Figures 2a to d show an alternative tracking device having a retaining strap;
Figures 3 shows an exploded view of a tracking device similar to that of Figure 2;
Figure 4a to c show a base station with use with different versions of the tracking device;
Figures 5a to c show a further example of the tracking device in the form of collar;
Figure 6 shows the anti-cut material within the collar of Figure 4; and
Figure 7 shows an illustrative example of the different modes.

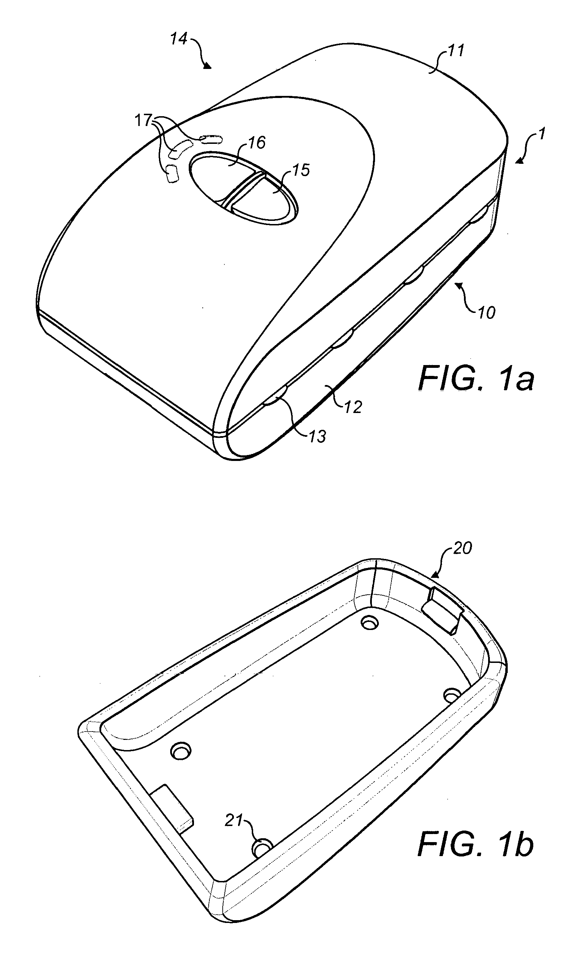

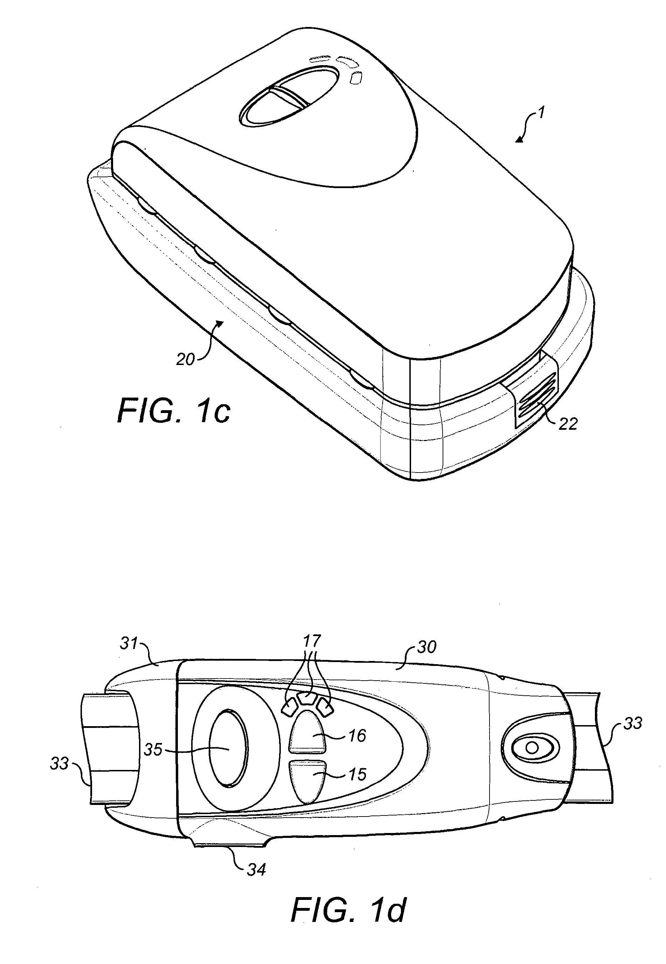

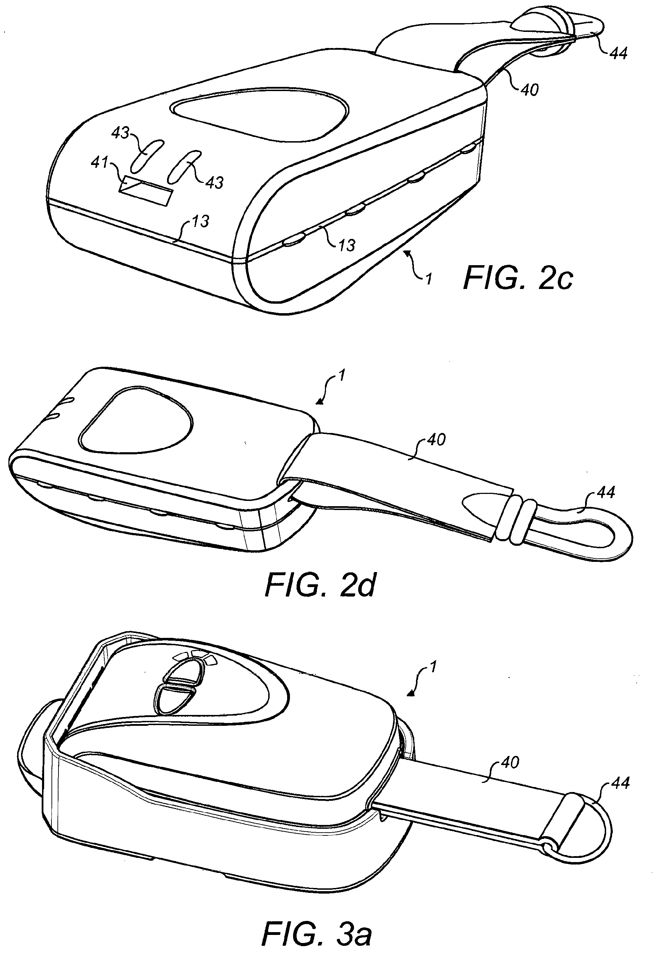

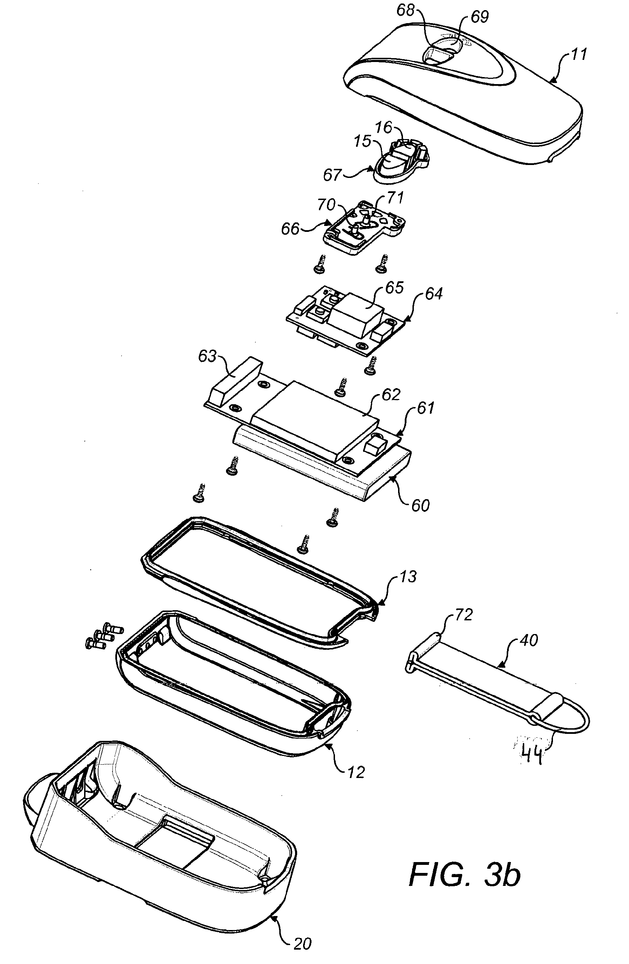

Figures 1 a to c illustrate one different example a tracking device 1. In Figures 1 a to c, the tracking device 1 is provided with a main body 10, typically formed of upper 11 and lower 12 sections, which are sealed, typically with a waterproof and/or dustproof seal 13. The upper portion is provided with a series of buttons 14, including a panic button 15, a status button 16 and a series of indicator lights 17, which represent for example, the battery, the GSM and the GPS modules. Further details of the tracking device are described with reference to Figure 3.

The main body 10 houses the necessary components, including battery, GPS module, GSM module, RF module, control electronics, a signal transmitter and a signal receiver.

A base plate 20 is shown in Figure 1b, to which the tracking device can be connected in use. The base plate can be attached by screws, for example through holes 21 to the asset, or, alternatively, by Velcro® or other suitable fixing means. Figure 1c illustrates the module of Figure 1a on the base plate of Figure 1B and further shows the catch 22 from releasing the tracking device from the base plate 20.

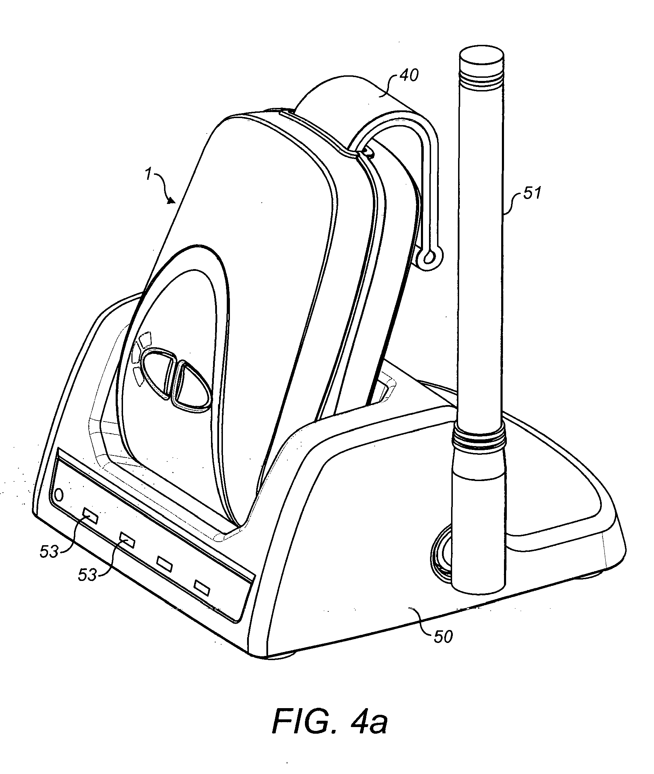

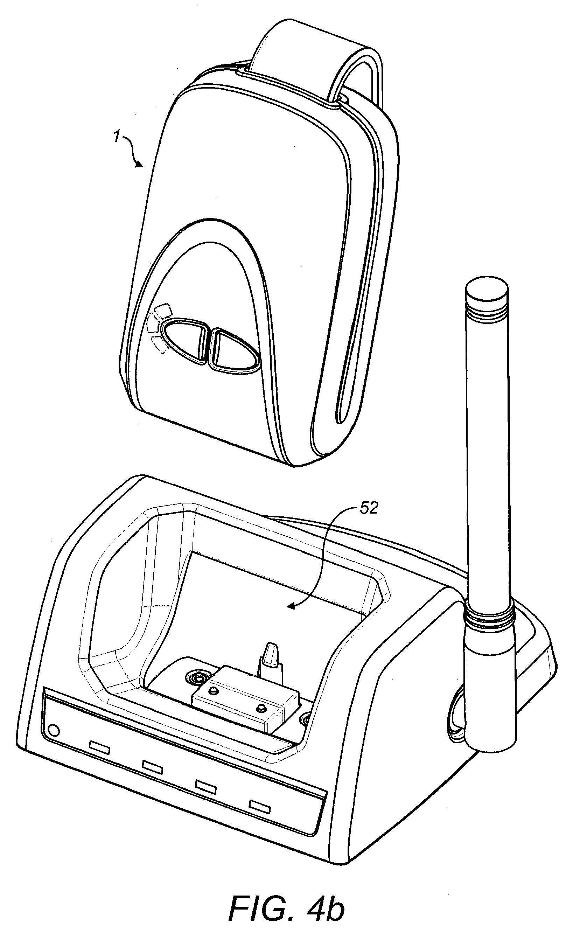

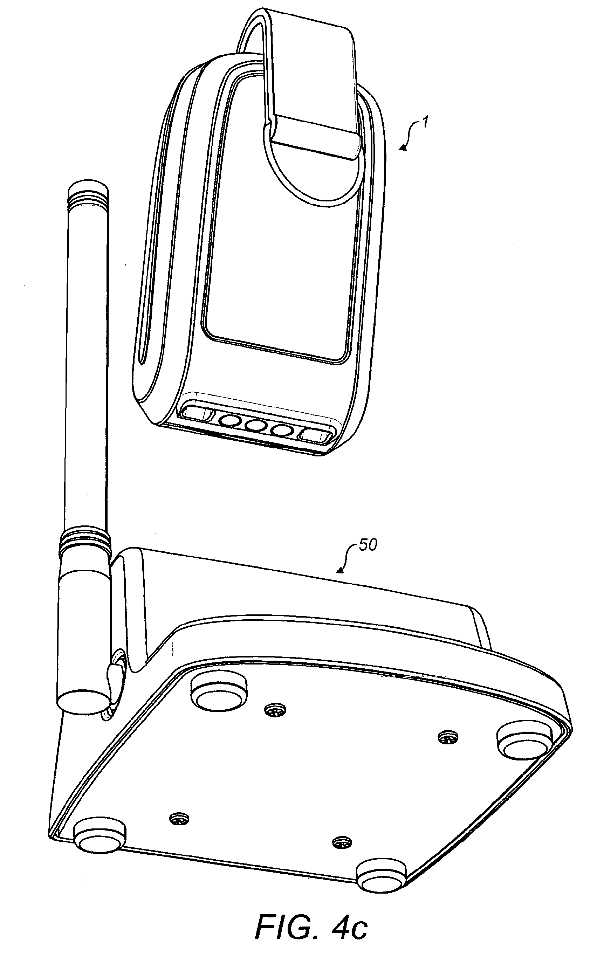

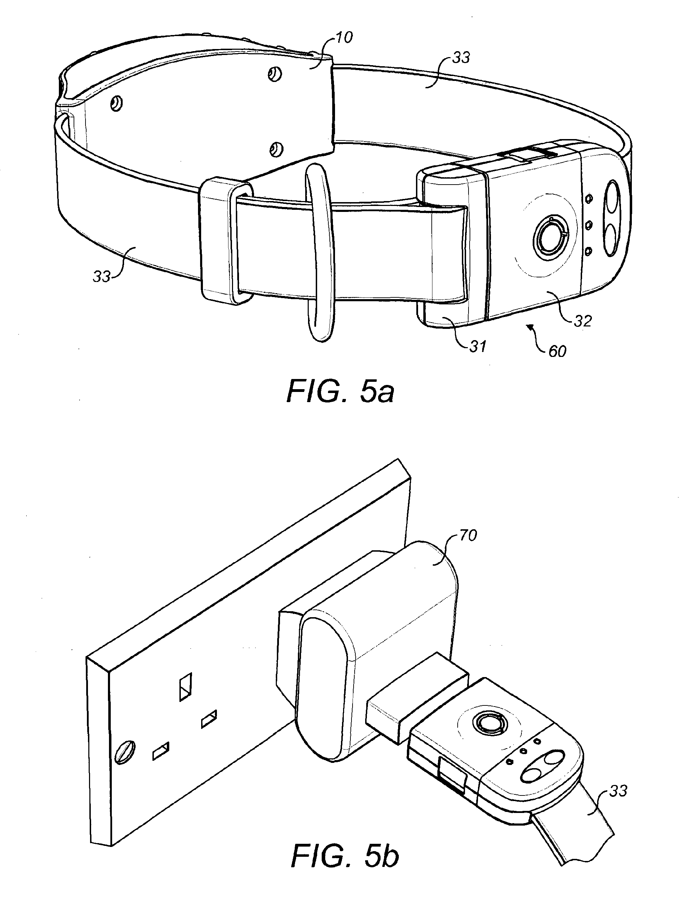

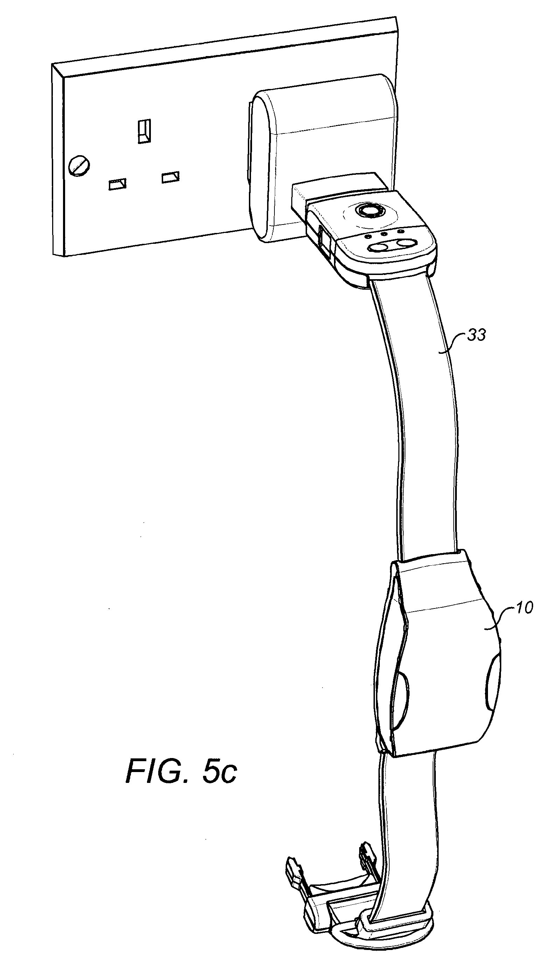

Figure 1d illustrates a two part buckle which has the same arrangement of buttons and lights 15, 16, 17, as shown in Figure 1a, this time on the female part 30 of the buckle. Male part 31 is shown in the engaged position. As shown in Figure 5, anti-cut material 32 runs through the strap 33 which forms the collar (see Figures 4a to c), the anti-cut material 32 may also include electrical wiring to carry power and other signals to and from the buckle and the main housing 10 (shown in Figure 4a), which contains the GSM module, the GPS module and the RF tracker module. The buckle is provided with a lock 34 which can be activated to prevent disengagement of release buckle 35.

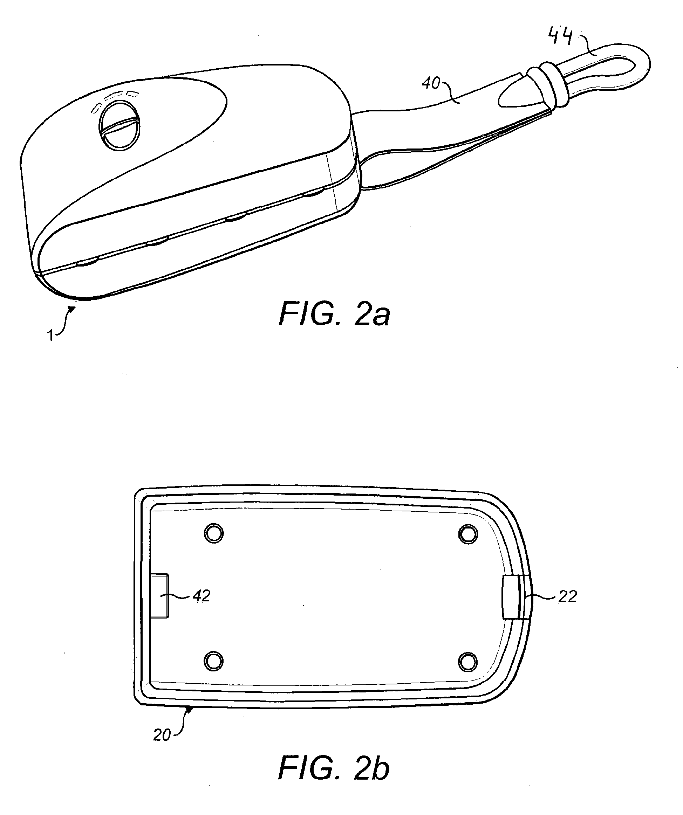

Figures 2a to d illustrate a further example of a tracking device, this time being formed with a strap 40 and connecting hook 44, which can used to connect the module to an asset. Figures 2b and c illustrate a recess 41 and hook 42 which can be provided on the tracking device and base plate respectively such that the tracking device can be connected to the base plate. Connection pins 43 are provided on the module, so that it can be recharged when connected to a suitable charging station (see Figures 4a to c).

Figure 3 illustrates an exploded view of a tracking device similar to that shown in Figures 2a to d. The tracker 1 is made up of upper 11 and lower 12 main body sections which, when formed together, sandwich a waterproof seal 13. The upper and lower body parts 11 and 12 enclose a battery 60, a PCB 61 on which the GSM module 62 and RF antenna 63 are provided. Above this, a further PCB 64 is provided for which the GPS antenna 65 is mounted. Above this, the button assembly switches 66 and the button assembly 67 are provided such that the buttons 15, 16 protrude into openings 68, 69 respectively in the top main body section 11. The buttons 15, 16 are aligned with corresponding switches 70, 71 for activation by a user. A strap 40 with hook engagement means 44 at its remote end can be connected and retained within the tracking device 1 by means of a retaining portion 72 which is clamped between and lower 12 housings. A plurality of screws or other fixing means are provided to retain each element in the desired position within the housing. An alternative form of base plate 20 is shown and this has the similar functionality to that shown in Figure 1b and c.

In Figures 4a to c, a charger 50 is shown having an antenna 51 for transmitting to and receiving signals from the tracking device. Within the central recess 52, electrical connections are provided for connecting to the tracking device 1 to enable power to be passed to the tracking device. A series of LEDs 53 are provided such that, if more than one tracking device is paired with a base station, e.g. an owner has 3 dogs and has a tracking collar on each dog, a user can tell which, if any, tracking devices are within range of the base station.

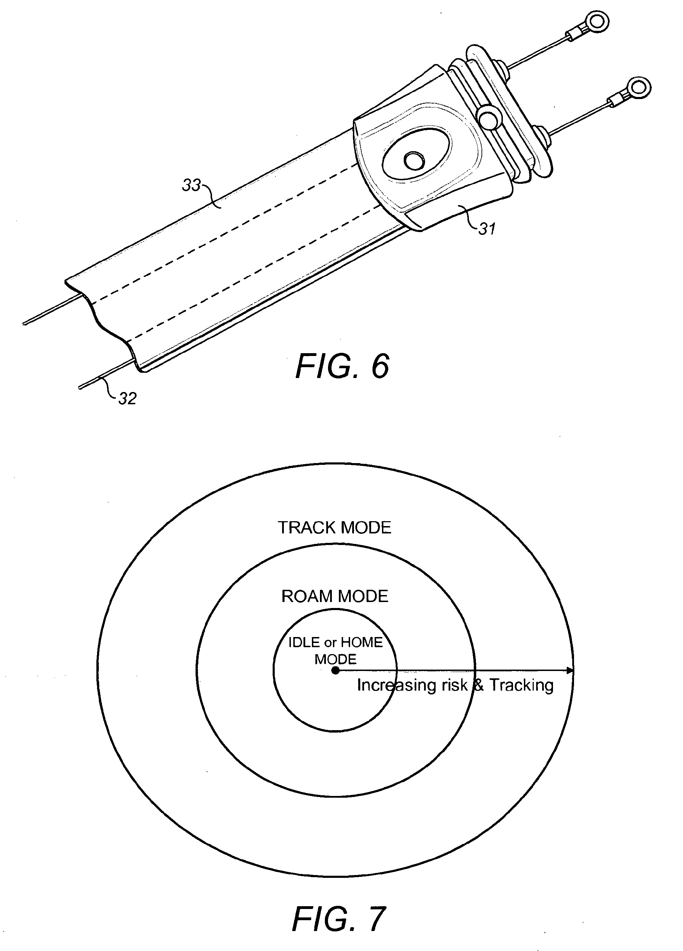

Figures 5a to c illustrate a further example of the tracking device incorporated into a collar 60 which can be secured around the neck or a limb of an animal such as a dog or horse. The collar is provided with a main housing 10 containing at least the GPS module, with a buckle 31, 32 on substantially the opposite side of the collar from the main housing 10. In this way, the buckle can be arranged such that it is "under" the neck of an animal and the GPS receiver can be "above" the neck, such that the GPS module has a good view of the sky. The strap 33 contains anti-cut material (as shown in Figure 6), the anti-cut material preferably also transferring electrical power between the main housing 10 and any electronics that may be incorporated in to the buckle 31, 32. Figures 5b and c show the collar the being charged using a simple charging device 70 which plugs in to a mains power socket. A simple charger of this type could be utilised as an additional charger, when the device is away from the base station.

Figure 7 illustrates the different extents of the various modes into which the tracking device can be placed.

## Claims

1. A system for tracking an asset, the system comprising:
a base station (50);
one or more tracking device(s) (1) for connection to the asset, the tracking device containing a GPS module, a GSM module and an RF module;
each of the base station and the tracking device comprising means for establishing a paired RF communications link with one another to set a geofenced area for the tracking device, the tracking device having means for communicating with the base station in the event that one or more of a set of predetermined conditions are achieved, and further including means for setting different modes of the system; **characterised in that**:
the tracking device (1) is arranged to automatically operate in a first mode in the case that the tracking device is within a first geofenced area, defined as being within RF communication range of said base station (50), the first mode being a home mode, which causes the GPS and GSM modules to operate in a reduced power consumption mode;
the tracking device (1) is further arranged to be preset with a reference set of GPS coordinates and is arranged to operate in a second mode when within a second geofenced area, defined as being within a preset radius of the location defined by the reference set of GPS coordinates, the second mode being a mode which causes the RF and GSM modules to operate in a reduced power consumption mode;
the tracking device (1) is further arranged to, in the case that the tracking device detects that it is no longer in either of the geofenced areas:
operate in a third, roaming, mode, in which the GPS receiver is active, the GSM module is active to receive commands and the device is monitoring for a paired RF transceiver of the base station, via the RF module;
send an alert to a user indicating that the device has left the first or second geofenced area; and
monitor for a command, sent from the user to the tracking device via the GSM module, instructing the device to switch to a fourth, tracking, mode, in which:
the GSM module is active and transmitting status data at intervals and monitoring for further user commands;
the RF transceiver is active to act as a homing beacon and to transmit identification, location and status of the tracking device; and
the tracking device will switch off its tracking mode in response to either a command received from a user or by detection of its position returning within either of the geofenced areas.

2. A system according to claim 1, wherein an alert is sent to the base station (50) from the tracking device (1).

3. A system according to claim 1, wherein an alert is sent to a third party from either the base station (50) or the tracking device (1).

4. A system according to claim 1, wherein an alert is sent to the tracking device (1) from the base station (50).

5. A system according to any one of claims 1 to 4, wherein the alert includes location information relating to the position of the tracking device (1).

6. A system according to any one of the preceding claims, wherein the conditions include one or more of the following: the tracking device has been tampered with; and the tracking device has been removed from the asset.

7. A system according to any one of the preceding claims, further comprising an alarm device located on either the tracking device (1) or the base station (50) which, on activation, initiates an alert.

8. A system according to any one of the preceding claims, further comprising means for enabling a user to over ride manually the system, such that communication from the tracking device (1) can be initiated.

9. A system according to claim 1, having a plurality of base stations (50) which may be placed, in use, at a distance from one another such that the area over which a tracking device (1) may move whilst remaining within RF communication range of any one of the base stations is larger than the area over which it may move whilst remaining within RF communication range of a single stationary base station.

10. A tracking device, arranged to operate as the tracking device of the system of any of claims 1 to 9.

## Patentansprüche

1. System zum Verfolgen eines Wertgegenstands, wobei das System Folgendes umfasst:
eine Basisstation (50),
einen oder mehrere Peilsender (1) zum Anschluss an den Wertgegenstand, wobei der Peilsender ein GPS-Modul, ein GSM-Modul und ein RF-Modul enthält,
wobei die Basisstation und der Peilsender Mittel zum Einrichten einer gepaarten RF-Kommunikationsverbindung miteinander umfassen, um einen virtuellen Umkreisbereich für den Peilsender einzustellen, wobei der Peilsender Mittel zur Kommunikation mit der Basisstation hat, für den Fall, dass einer oder mehrere eines Satzes von vorbestimmten Bedingungen erzielt werden, und ferner Mittel zum Einstellen verschiedener Modi des Systems beinhalten, **dadurch gekennzeichnet, dass**
der Peilsender (1) so angeordnet ist, dass er automatisch in einem ersten Modus betrieben wird, in dem Fall, dass der Peilsender innerhalb eines ersten virtuellen Umkreisbereichs ist, der als innerhalb eines RF-Kommunikationsbereichs einer Basisstation (50) definiert wird, wobei der erste Modus ein Heim-Modus ist, der verursacht, dass die GPS- und GSM-Module in einem reduzierten Leistungsverbrauchsmodus betrieben werden,
wobei der Peilsender (1) ferner so angeordnet ist, dass er mit einem Referenzsatz von GPS-Koordinaten voreingestellt wird, und so angeordnet ist, dass er in einem zweiten Modus betrieben wird, wenn er sich innerhalb eines zweiten virtuellen Umkreisbereichs befindet, was als innerhalb eines voreingestellten Radius der Position definiert wird, die wiederum von einem Referenzsatz von GPS-Koordinaten definiert wird, und wobei der zweite Modus ein Modus ist, der verursacht, dass die RF- und GSM-Module in einem Modus mit reduziertem Leistungsverbrauch betrieben werden,
der Peilsender (1) ferner so angeordnet ist, dass er im Falle, dass der Peilsender erkennt, dass er nicht mehr in einem der virtuellen Umkreisbereiche ist, und dass
er in einem dritten, freilaufenden Modus betrieben wird, in dem der GPS-Empfänger aktiv ist, das GSM-Modul aktiv zum Empfang vom Befehlen ist, und das Gerät auf einem gepaarten RF-Empfänger der Basisstation über das RF-Modul überwacht wird,
er einen Alarm an einen Benutzer sendet, der anzeigt, dass das Gerät den ersten oder zweiten virtuellen Umkreisbereich verlassen hat, und
er einen Befehl überwacht, der vom Benutzer zum Peilsender über das GSM-Modul gesandt wird, und das Gerät anleitet, dass es zu einem vierten Peilmodus schaltet, in dem
das GSM-Modul aktiv ist und Statusdaten in Abständen überträgt und auf weitere Benutzerbefehle überwacht,
der RF-Empfänger aktiv ist, um als Zielsuchstation zu agieren und um die Identifizierung, Position und den Status des Peilsenders zu übertragen, und
der Peilsender seinen Peilmodus als Reaktion auf entweder einen eingegangen Befehl schaltet, der von einem Benutzer empfangen wird ist, oder durch Erkennung seiner Position, die innerhalb eines der virtuellen Umkreisbereiche zurückgesetzt wird.

2. System nach Anspruch 1, wobei ein Alarm an die Basisstation (50) vom Peilsender (1) gesandt wird.

3. System nach Anspruch 1, wobei ein Alarm an Dritte von entweder der Basisstation (50) oder dem Peilsender (1) gesandt wird.

4. System nach Anspruch 1, wobei ein Alarm zum Peilsender (1) von der Basisstation (50) gesandt wird.

5. System nach Anspruch 1 bis 4, wobei der Alarm Informationen über die Position beinhaltet, die sich auf die Position des Peilsenders (1) beziehen.

6. System nach einem der vorangehenden Ansprüche, wobei die Bedingungen eine oder mehrere der Folgenden beinhalten: der Peilsender wurde manipuliert, und der Peilsender wurde vom Wertgegenstand entfernt.

7. System nach einem der vorhergehenden Ansprüche, das ferner ein Alarmgerät umfasst, das an einem der Peilsender (1) oder der Basisstation (50) positioniert ist, das beim Aktivieren einen Alarm auslöst.

8. System nach einem der vorangehenden Ansprüche, das ferner ein Mittel zum Befähigen eines Benutzers zum manuellen Überlagern des Systems umfasst, sodass die Kommunikation vom Peilsender (1) eingeleitet werden kann.

9. System nach Anspruch 1, das eine Vielzahl von Basisstationen (50) hat, die in Verwendung in einem Abstand voneinander platziert werden können, sodass der Bereich, über den sich ein Peilsender (1) bewegen kann, während ein RF-Kommunikationsbereich von einer der Basisstationen größer ist, als der Bereich, über den er sich bewegen kann, während er innerhalb des RF-Kommunikationsbereichs einer einzelnen feststehenden Basisstation bleibt.

10. Peilsender, der so angeordnet ist, dass er als Peilsender des Systems nach einem der Ansprüche 1 bis 9 betrieben wird.

## Revendications

1. Système de localisation d'un bien, le système comportant :
une station de base (50);
un ou plusieurs dispositifs de localisation (1) à raccorder au bien, le dispositif de localisation contenant un module GPS, un module GSM (système mondial de télécommuniction mobile), et un module RF;
la station de base et chaque dispositif de localisation comportant des moyens pour établir une liaison de communication RF appariée l'un avec l'autre en vue d'établir une zone géoséparée pour le dispositif de localisation, ce dispositif de localisation possédant des moyens pour communiquer avec la station de base si l'une ou plusieurs des conditions faisant partie d'un ensemble prédéterminé sont réunies, et comportant par ailleurs des moyens pour définir plusieurs modes différents du système, **caractérisé en ce que** :
le dispositif de localisation (1) est prévu pour fonctionner automatiquement dans un premier mode si le dispositif de localisation se trouve dans une première zone géoséparée, définie comme se trouvant à portée de communication RF de cette station de base (50), le premier mode étant un mode de ralliement, qui fait que les modules GPS et GSM fonctionnent avec une consommation électrique réduite;
le dispositif de localisation (1) est prévu par ailleurs pour se voir affecter au préalable un ensemble de coordonnées de référence GPS, et il est capable de fonctionner dans un deuxième mode lorsqu'il se trouve dans une deuxième zone géoséparée, définie comme se trouvant dans un rayon prédéterminé à partir de l'emplacement défini par l'ensemble de coordonnées de référence GPS, le deuxième mode étant un mode qui fait que les modules RF et GSM fonctionnent avec une consommation électrique réduite;
par ailleurs, si le dispositif de localisation (1) détecte qu'il ne se trouve plus dans l'une ou l'autre des zones géoséparées, le dispositif de localisation est prévu pour:
fonctionner dans un troisième mode itinérant, dans lequel le récepteur GPS est actif, le module GSM est actif pour recevoir les commandes, et le dispositif surveille en vue de détecter un émetteur/récepteur RF apparié de la station de base, au moyen du module RF apparié;
transmettre une une alert à l'utilisateur indiquant que le dispositif a quitté la première ou la deuxième zone géoséparée; et
surveiller en vue de détecter une commande transmise par l'utilisateur au dispositif de localisation au moyen du module GSM, demandant au dispositif de se mettre dans un quatrième mode de localisation, dans lequel:
le module GSM se met en oeuvre et transmet des détails sur l'état à certains intervalles, et surveille en vue de détecter la réception éventuelle des commandes ultérieures de l'utilisateur;
l'émetteur/récepteur RF se met en oeuvre pour faire fonction de balise de ralliement et transmettre l'identification, l'emplacement et l'état du dispositif de localisation; et
le dispositif de localisation interrompt son mode de localisation s'il reçoit une commande émanant d'un utilisateur ou bien s'il détecte sa position dans l'une ou l'autre des zones géoséparées.

2. Système selon la revendication 1, **caractérisé en ce qu'**une alerte est transmise à la station de base (50) par le dispositif de localisation (1).

3. Système selon la revendication 1, **caractérisé en ce qu'**une alerte est transmise à un tiers soit par la station de base (50) soit par le dispositif de localisation (1).

4. Système selon la revendication 1, **caractérisé en ce qu'**une alerte est transmise au dispositif de localisation (1) par la station de base (50).

5. Système selon l'une quelconque des revendications 1 à 4, **caractérisé en ce que** l'alerte comporte des informations de localisation concernant la position du dispositif de localisation (1).

6. Système selon l'une quelconque des revendications précédentes, **caractérisé en ce que** les conditions couvrent une ou plusieurs des éventualités suivantes: le dispositif de localisation a été trafiqué, ou bien le dispositif de localisation a été séparé du bien.

7. Système selon l'une quelconque des revendications précédentes, comportant par ailleurs un dispositif d'alarme placé soit sur le dispositif de localisation (1) soit au niveau de la station de base (50) et qui, dès qu'il est activé, déclenche une alerte.

8. Système selon l'une quelconque des revendications précédentes, comportant par ailleurs des moyens permettant à l'utilisateur de contourner manuellement le système, ce qui permet de mettre en oeuvre la communication à partir du dispositif de localisation (1)

9. Système selon la revendication 1, comportant une pluralité de stations de base (50) qui peuvent être disposées, en cours d'usage, à une certaine distance les unes des autres de telle manière que la superficie que peut couvrir un dispositif de localisation (1) donné, tout en se tenant en communication RF avec l'une quelconque des stations de base, est supérieure à la superficie qu'il peut couvrir tout en se tenant en communication RF avec une seule station de base fixe.

10. Dispositif de localisation prévu pour fonctionner comme dispositif de localisation du système décrit dans l'une quelconque des revendications 1 à 9.
